# EUROPEAN PATENT SPECIFICATION

(11) **EP 2 677 830 B1**
(45) Date of publication and mention of the grant of the patent: **17.08.2016**
(21) Application number: 12305710.1
(22) Date of filing: 21.06.2012
(51) Int. Cl.: H04W 72/12, H04W 28/16, H04W 92/04

(54) **Apparatus, Method and Computer Program for a Meta-scheduler**
Vorrichtung, Verfahren und Computerprogramm für ein Meta-Zeitplanungsprogramm
Appareil, procédé et programme informatique pour un méta-planificateur

(43) Date of publication of application: 25.12.2013
(73) Proprietor: ALCATEL LUCENT, 92100 Boulogne-Billancourt (FR)
(72) Inventor: Fahldieck, Torsten, 71254 Ditzingen (DE)
(74) Representative: Knecht, Ulrich Karl

(56) References cited:
- US-A1- 2012 002 620
- YASIR ZAKI ET AL: "LTE mobile network virtualization ; Exploiting multiplexing and multi-user diversity gain", MOBILE NETWORKS AND APPLICATIONS, KLUWER ACADEMIC PUBLISHERS, BO, vol. 16, no. 4, 10 June 2011 (2011-06-10), pages 424-432, XP019923415, ISSN: 1572-8153, DOI: 10.1007/S11036-011-0321-7
- GAUTAM BHANAGE ET AL: "Virtual Basestation: Architecture for an Open SharedWiMAX Framework", VISA '10 PROCEEDINGS OF THE SECOND ACM SIGCOMM WORKSHOP ON VIRTUALIZED INFRASTRUCTURE SYSTEMS AND ARCHITECTURES; SEPTEMBER 3, 2010; NEW DELHI, INDIA, ASSOCIATION FOR COMPUTER MACHINERY, NEW YORK, NY, , 3 September 2010 (2010-09-03), pages 1-8, XP002621532, DOI: 10.1145/1851399.1851401 ISBN: 978-1-4503-0199-2 Retrieved from the Internet: URL:http://delivery.acm.org/10.1145/186000 0/1851401/p1-bhanage.pdf?key1=1851401&key2 =9666717921&coll=DL&dl=ACM&CFID=9224236&CF TOKEN=79388925 [retrieved on 2011-02-08]
- "BYPASS NETWORK INTERFACE CARD", IP.COM JOURNAL, IP.COM INC., WEST HENRIETTA, NY, US, 31 August 2009 (2009-08-31), XP013133409, ISSN: 1533-0001

## Description

Embodiments of the present invention relate to mobile communication systems, in particular but not exclusively to mobile communication systems, which provide a unified access to an operator.

### Background

Demands for mobile services, especially relating to data services, are steadily increasing. Mobile data devices, such as smartphones, cell phones, tablet computers, lap-tops, notebooks, etc., become more and more popular, thereby generating more and more demand for wireless data services. At the same time, expectations of users steadily increase. On the network operator side the capacity of mobile communication networks is growing accordingly, as more and more operators or service providers enter the market. Hardware costs and installation costs are major contributors to the overall costs that arise to operators. In the wireless world, the improvement of the network efficiency and the reduction of costs become more and more important.

A strategy that is discussed among operators and providers is to share the resources, i.e. the installed hardware such as base stations, access points, etc., between multiple operators. In such a scenario, multiple operators would provide their services using the same network hardware. The sharing of resources can be accomplished in different ways. One possibility is to share the infrastructure of a mobile network, for example, the infrastructure established by a base station and/or the backhaul network. This can be achieved, for example, by sharing the spectrum, i.e. by assigning different parts of the bandwidth of a system to different operators. In order to enable multiple operators to share the same hardware, strategies may be needed on how the resources of a network, especially the radio resources, are shared and assigned to the operators. Especially in high-load situations, i.e. in situations where the network capabilities are used up almost to their full extent, efficient and transparent resource assignment mechanisms are desirable.

Furthermore, architectures of Radio Access Network (RAN) deployments may comprise so called cloud RANs. In conventional base station transceivers BaseBand processing Units (BBUs) are rigidly coupled with the antennas leading to a suboptimum usage of resources. The decoupling of BBUs from the High Frequency (HF) front ends, which are also referred to as Remote Radio Units (RRUs) or Remote Radio Heads (RRH), allows for collecting the BBU resources in a virtual baseband processing pool and flexibly assign them according to the arriving requests. A cloud RAN may comprise general purpose computer hardware possibly with additional coprocessors or specialized hardware for the purpose of radio processing. Such a cloud RAN, also called base station cluster, can be connected to a plurality of RRHs via optical fibers. The RRH are deployed at different sites to cover an area as, e.g., a whole town. Inside the base station or BBU cluster, a plurality of virtual Base Stations (vBS) can be configured. Every vBS can be dynamically instantiated or removed on demand. Such a cloud deployment offers the operator of the RAN high flexibility in configuration. A RAN comprising vBS is also referred to as a Virtualized RAN (VRAN).

Document US2012/002620 A1 describes a method employing a base station with downlink and uplink flows of information between users; remotely virtualizing the flows from an entity external to the base station without any modification to the base station; and creating virtual base stations or networks responsive to the remotely virtualizing.

Yasir Zaki, et al, disclose in "LTE mobile network virtualization: Exploiting multiplexing and multi-user diversity gain", Mobile Networks and Applications, Kluwer, Academic Publishers, vol. 16, no. 4, June 2011, a wireless virtualization. In this paper a general framework for virtualizing the wireless medium is proposed and investigated. This framework focuses on virtualizing mobile communication systems so that multiple operators can share the same physical resources while being able to stay isolated from each other. The authors mainly focus on the Long Term Evolution (LTE) but the framework can also be generalized to fit any other wireless system. The goal of the paper is to exploit the advantages that can be obtained from virtualizing the LTE system, more specifically virtualizing the air interface (i.e. spectrum sharing). Two different possible gain areas are explored: spectrum multiplexing and multi-user diversity.

### Summary

Embodiments are based on the finding that for a cloud VRAN with a plurality of radio interfaces, different types of radio technologies and a plurality of vBS, an improved resource management may be desirable as compared to a conventional base station. It is a further finding that an improved and generalized radio resource management can be achieved by a meta-scheduler, which may increase the flexibility of a cloud RAN. Furthermore such a meta-scheduler can be logically located between a vBS and the lower protocol layers of a radio processing, such as the PHYsical layer (PHY) and the Medium Access Control layer (MAC). Embodiments are further based on the finding that such a meta-scheduler may provide logical connections between the vBS or their virtualized schedulers and the underlying radio processing via a cross bar realized as packet switch.

Embodiments provide an apparatus for a meta-scheduler for interfacing between a virtualized scheduler and a scheduler of a wireless communication system. Hence, embodiments may provide said apparatus to be operated in or by a meta-scheduler. The apparatus will also be referred to as meta-scheduler apparatus. Embodiments may also provide a meta-scheduler comprising said meta-scheduler apparatus. In embodiments the mobile communication system may, for example, correspond to one of the 3^{rd} Generation Partnership Program (3GPP)-standardized mobile communication networks, where the term mobile communication system is used synonymously to mobile communication network. The mobile or wireless communication system may correspond to, for example, a Long-Term Evolution (LTE), an LTE-Advanced (LTE-A), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc., or mobile communication networks with different standards, for example, a Worldwide Inter-operability for Microwave Access (WIMAX) network.

The virtualized scheduler can be part of an implementation of a vBS, such as a NodeB in a UTRAN or an e-NodeB in an e-UTRAN. In embodiments the virtualization of resources, especially the sharing of resources, can be realized in different ways. For example, the sharing of a NodeB can be realized by using a virtualization of the NodeB. That is to say that single eNodeB hardware may provide a platform, which enables the implementation of multiple virtual eNodeBs. In case of such an eNodeB, or a base station transceiver more generally, the internal components like the Central Processing Unit (CPU), memory or network interfaces, radio and backhaul, etc., would be virtualized or would support virtualization. Such a platform would enable a number of operators to own their own virtual base station transceiver or eNodeB and they may run their own operational software on this virtual eNodeB or base station transceiver.

It is a further finding of embodiments that enhanced architectural requests for future radio networks may arise from operators. Moreover, it is a finding that in order to enable a virtualization scenario, defined and standardized interfaces may be needed in a way that virtualized software from different operators could be executed on the hardware and developed or written from different vendors. It is a further finding that, e.g. in case of spectrum sharing, an interface or an intermediate layer may be defined referring to a concept for allocating physical resources to scheduling, i.e. to enhance scheduler architectures for enabling multi-operator spectrum sharing or virtualization.

Embodiments of the meta-scheduler apparatus therefore comprise a first interface for communicating with the virtualized scheduler. That is to say in embodiments an interface to a virtualized scheduler or a vBS may be defined, which may even be standardized. Such a well-defined interface, as, for example, in terms of an application programming interface (API), may enable programmers adapt a software implementation of a virtualized scheduler or a vBS to the first interface of meta-scheduler apparatus. The meta-scheduler apparatus further comprises a second interface for communicating with the scheduler of the wireless communication system. Said second interface can be adapted to implementation specific details of the respective hardware or software, i.e. the interface of a physical BS or the real or physical scheduler of the wireless communication system. Furthermore, the meta-scheduler apparatus is operable to transform between information on abstract resources communicated on the first interface and information on radio resources of the wireless communication system communicated on the second interface. That is to say, the meta-scheduler is operable to transform information on abstract resources communicated on the first interface to information on radio resources of the wireless communication system communicated on the second interface, and/or to transform information on radio resources of the wireless communication system communicated on the second interface to information on abstract resources communicated on the first interface. In other words the meta-scheduler apparatus may map resources provided on the first interface to radio resources provided on the second interface, i.e. a mapping of the virtualized or abstract resources to real radio resources of the wireless communication system may be provided.

The real resources or the radio resources provided by the mobile communication system may correspond to time resources, such as radio frames, sub-frames, Time Transmission Intervals (TTI), time slots, symbols, they may correspond to frequency resources, such as carriers, sub-carriers, frequency layers, sub-bands, they may correspond to code resources, such as channelization or scrambling codes, spreading codes, they may also correspond to spatial resources, such as spatial sub-channels in a Multiple-Input-Multiple-Output (MIMO) system, certain beams in a beam forming system, etc.

The virtual resources may correspond to any abstract information format, such a virtual transfer unit. In some embodiments the virtual scheduler may then carry out a scheduling concept, e.g. a round robin or a proportional fair virtual scheduler, on basis or on the granularity of such virtual transfer units.

Embodiments may therewith provide means for an information exchange between a virtualized scheduler, which can be implemented on layer 2 or the Medium Access Control layer (MAC), and the physical layer or layer 1, which is responsible for the encoding and decoding of the control and data channels. It is a further finding of embodiments that conventional architectures, especially the layered approach where one scheduler for one operator uses all the services of the physical layer can be broken up. Especially layer 2, i.e. the layer where the scheduler is located, can be differentiated or broken up into an operator-specific scheduler and a meta-scheduler. The meta-scheduler may then provide information to the operator-specific schedulers, on which resources can be used for control channel signaling and for data transmission. That is to say embodiments may provide a meta-scheduler apparatus, which according to operator agreements or allocation rules, distributes resources provided by a physical layer to operator-specific schedulers. The operator-specific schedulers may then comprise operator-specific implementations of a virtualized scheduler, making use of the information provided by the meta-scheduler, and then communicate with the physical layer of the real system using the meta-scheduler.

Embodiments may also provide a base station transceiver, which comprises a meta-scheduler apparatus. The virtualized scheduler can be part of a software implementation of an operator specific base station transceiver. The base station transceiver can correspond to a vBS.

In embodiments the meta-scheduler apparatus can be operable to provide a logical connection between the virtualized scheduler and the scheduler of the wireless communication system. Said logical connection may correspond to a protocol context, e.g. in terms of a predetermined communication format, on the first interface, which is mapped onto another predetermined protocol context, e.g. in terms of the same or another predetermined communication format, established with the scheduler of the wireless communication system on the second interface.

In further embodiments the first interface can be operable to communicate with a plurality of virtualized schedulers. That is to say multiple virtualized schedulers, which can be assigned to multiple operators or multiple vBS, may be served by the meta-scheduler apparatus. The apparatus can be operable to transform between information on abstract resources communicated on the first interface with the plurality of virtualized schedulers and information on radio resources of the wireless communication system communicated on the second interface. That is to say the meta-scheduler apparatus may communicate with and coordinate multiple virtualized schedulers, as, for example, in a multi operator scenario.

For example, the meta-scheduler apparatus may provide information on an availability of a subset of universal resources from a plurality of universal resources. That is to say that the resources, for example, the radio resources, which are used by the wireless communication system, can be made universal, i.e. represented using an abstract measure. An operator-specific scheduler can then use these abstract resources, which can be universal control resources or universal data resources, to schedule users which are assigned to the operator. The virtualized scheduler is then operable to allocate a universal control resource and/or a universal data resource to a user associated with the operator based on the information on the availability of the subset of universal resources.

In other words, as universal resources are treated by the operator-specific or virtualized scheduler, an abstraction can take place. Said abstraction is based on the real resources and lies in the mapping of the real resources to the universal resources, which is carried out by the meta-scheduler apparatus. The universal resources can be specified, for example, they can have a specified or standardized format, based on which implementations of operator-specific schedulers or base station transceivers can operate.

In some embodiments the plurality of virtualized schedulers shares the spectrum of the wireless communication system. Hence some parts of the bandwidth utilized by the wireless communication system are assigned to one operator; some other parts are assigned to another operator. The apparatus can be operable to provide logical connections between the plurality of virtualized schedulers and respective spectrum shares of the radio resources of the wireless communication system. Hence, a logical connection provided by the meta-scheduler apparatus may then provide a mapping of the abstract resource for a respective virtualized scheduler to the respective spectral share of the physical scheduler.

In further embodiments the second interface can be operable to communicate with multiple schedulers of the same or of different wireless communication systems. Hence multiple real or physical schedulers can be served by the meta-scheduler apparatus. These multiple real schedulers may be comprised in the same wireless communication system, e.g. being assigned to different locations, or they may be assigned to different wireless communication systems, such as systems of the same standard at different frequencies, or systems of different radio access technologies.

The second interface can be operable to communicate with multiple schedulers of the same wireless communication system and the meta-scheduler apparatus can be operable to communicate a data packet received from a virtualized scheduler to multiple schedulers at multiple transmission points of the wireless communication system.

As it has already been mentioned above, the mobile communication system may further comprise a base station transceiver and embodiments may provide a base station transceiver comprising the meta-scheduler apparatus. Generally a base station transceiver is also referred to as transmission point and it can be operable to communicate with one or more mobile transceivers. In embodiments, the mobile communication system may comprise mobile transceivers and base station transceivers. A base station transceiver may establish a macro cell or a small cell, as, for example, a pico, metro, or a femto cell. A mobile transceiver may correspond to a smartphone, a cell phone, a laptop, a notebook, a personal computer, a Personal Digital Assistant (PDA), a Universal Serial Bus (USB)-stick, a car, etc. Reference may also be made to handheld or mobile. A mobile transceiver may also be referred to as User Equipment (UE) in line with the 3GPP terminology.

A base station transceiver can be located in the fixed or stationary part of the network or system. A base station transceiver may correspond to a remote radio head, a transmission point, an access point, a macro cell, a small cell, a micro cell, a femto cell, a metro cell, etc. A base station transceiver can be a wireless interface of a wired network, which enables transmissions and receptions of radio signals to a UE or a mobile transceiver. Such a radio signal may comply with radio signals as, for example, standardized by 3GPP or, generally, in line with one or more of the systems listed above. Thus, a base station transceiver may correspond to a NodeB, an enhanced-NodeB, a Base Transceiver Station (BTS), an access point, a remote radio head, a transmission point, etc., which may be further subdivided into a remote and a central unit.

If a data packet received from a virtualized scheduler is communicated to multiple schedulers at multiple transmission points of the wireless communication system enhanced transmission concepts can be established. For example, Cooperative Multipoint (COMP) transmission can be used. In this case multiple transmission points may transmit data to the same mobile transceiver. In order to coordinate the transmission and to synchronize the data which is transmitted, said data can be provided by the meta-scheduler apparatus to the cooperating transmission points.

In some embodiments the second interface is operable to communicate with multiple schedulers of the same wireless communication system also for uplink transmission, i.e. for transmission from a mobile transceiver, which is received by the multiple schedulers of the same wireless communication systems. The meta-scheduler apparatus can then be operable to provide the scheduler with radio resource assignments or allocations such that the meta-scheduler receives a plurality of copies of a data packet from the multiple schedulers of said same wireless communication system. For example, multiple transmission points of the wireless communication system receive the same transmission from a mobile transceiver. Note that the multiple copies of the data packet may be provided by a reception entity collocated and coupled with the respective schedulers in the wireless communication system. The apparatus can be further operable to combine the plurality of copies to obtain a combined copy of the data packet. That is to say that a combining method, such as selection combining, maximum ratio combining, diversity combining, etc. may be applied to the multiple copies to obtain the combined copy.

The apparatus can be further operable to forward the combined copy of the data packet to the virtualized scheduler. The combined copy may provide a higher quality, e.g. in terms of a Signal-to-Noise-Ratio (SNR), a Signal-to-Interference-and-Noise-Ratio (SINR), a Signal-to-Interference-Ratio (SIR), a Bit-Error-Ratio (BER), a Frame-Error-Ratio (FER), a block-error-rate, etc. than an average copy of the multiple copies from the schedulers from the wireless communication system.

In further embodiments, the second interface can be operable to communicate with multiple schedulers of different wireless communication systems. The apparatus can be operable to communicate a data packet received from the virtualized scheduler to multiple schedulers at multiple transmission points of the different wireless communication systems. In some embodiments, the apparatus can be operable to communicate a data packet to one of the schedulers of the wireless communication systems or even to multiple schedulers of the wireless communication systems. Hence, in some embodiments a sort of COMP may be carried out using different wireless communication systems, which may correspond to systems of the same standard operating at different frequencies or systems of different standards.

In some embodiments parallel transmission can be carried out, i.e. the schedulers of the different wireless communication system are used to transmit different data packets to a mobile transceiver in parallel, for example, to enhance an overall data rate or Quality of Service (QoS) provided to said mobile transceiver. In further embodiments the meta-scheduler apparatus may decide to which one of the multiple schedulers of the different wireless communication systems a data packet is forwarded, based on QoS requirements of the mobile transceiver and the QoS capabilities of the respective wireless communication systems.

The second interface can be operable to communicate with multiple schedulers of different wireless communication systems and the apparatus can be operable to receive a plurality of copies of a data packet from the multiple schedulers of the different wireless communication systems. Hence, macro diversity combining may be carried out across the multiple systems. The apparatus can be further operable to combine the plurality of copies to a combined copy of the data packet, in line with the above description but using different wireless communication systems. The apparatus can be is further operable to forward the combined copy of the data packet to the virtualized scheduler.

Moreover, the second interface can be operable to communicate with multiple schedulers of different wireless communication systems and the apparatus can be operable to communicate a data packet received from the virtualized scheduler to one of the different wireless communication systems based on load information or QoS provision of the different wireless communication systems. Hence, in some embodiments the meta-scheduler apparatus may be aware of a load status in the different wireless communication systems and base a decision to which one of the schedulers a data packet is forwarded on said load status.

In some embodiments, the meta-scheduler apparatus can be operable to carry out data packet switching of data packets received on the first interface and transmitted on the second interface and to carry out data packet switching of data packet received on the second interface and transmitted on the first interface. Moreover, the apparatus can be operable to add identification information to a data packet received on the first or second interface. That is to say information may be added that allows unambiguous assignment or mapping of data packets between the virtualized schedulers and the schedulers of the wireless communication systems. The identification information identifies the scheduler of the wireless communication system or the virtualized scheduler as destination of the data packet. For example, such information can be comprised in respective packet headers or tagged onto the packets.

Embodiments also provide a method for a meta-scheduler for interfacing between a virtualized scheduler and a scheduler of a wireless communication system. The method comprises communicating on a first interface with the virtualized scheduler and communicating on a second interface with the scheduler of the wireless communication system. The method further comprises transforming between information on abstract resources communicated on the first interface and information on radio resources of the wireless communication system communicated on the second interface.

Embodiments may further provide a computer program having a program code for performing one of the methods described above, when the computer program is executed on a computer or a processor. Some embodiments comprise a digital control circuit installed within the apparatus for performing the method. Such a digital control circuit, e.g. a Digital Signal Processor (DSP), needs to be programmed accordingly. Hence, yet further embodiments also provide a computer program having a program code for performing embodiments of the method, when the computer program is executed on a computer or a digital processor.

Embodiments may improve the flexibility of a cloud based virtual RAN. The internal structure of a cloud based VRAN can be changed on demand and the radio resources (spectrum), radio technologies and hardware resources can be flexibly rearranged.

### Brief description of the Figures

Some embodiments of apparatuses and/or methods will be described in the following by way of example only, and with reference to the accompanying figures, in which
Fig. 1 shows a block diagram of an embodiment of a meta-scheduler apparatus;
Fig. 2 shows embodiments of meta-schedulers in different scenarios;
Fig. 3 shows further embodiments of meta-schedulers in different scenarios; and
Fig. 4 shows a block diagram of a flowchart of an embodiment of a method for a meta-scheduler.

### Description of Embodiments

Various example embodiments will now be described more fully with reference to the accompanying drawings in which some example embodiments are illustrated. In the figures, the thicknesses of lines, layers and/or regions may be exaggerated for clarity.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (*e.g.*, "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

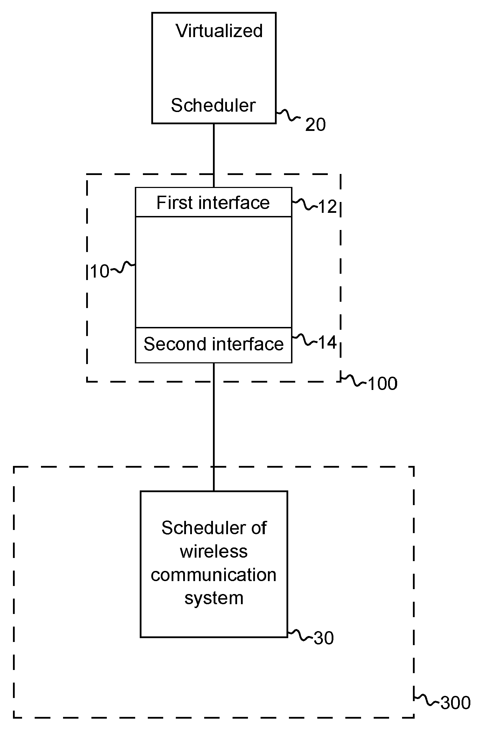

Fig. 1 shows a block diagram of an embodiment of a meta-scheduler apparatus 10. The apparatus 10 for a meta-scheduler 100 is operable for interfacing between a virtualized scheduler 20 and a scheduler 30 of a wireless communication system 300. The apparatus 10 comprises a first interface 12 for communicating with the virtualized scheduler 20 and comprises a second interface 14 for communicating with the scheduler 30 of the wireless communication system 300. The apparatus 10 is operable to transform between information on abstract resources communicated on the first interface 12, and which are provided to the virtualized scheduler 20, and information on radio resources of the wireless communication system 300 communicated on the second interface 14. That is to say, the meta-scheduler 100 is operable to transform information on abstract resources communicated on the first interface 12 to information on radio resources of the wireless communication system 300 communicated on the second interface 14, and to transform information on radio resources of the wireless communication system 300 communicated on the second interface 14 to information on abstract resources communicated on the first interface 12.

The virtualized scheduler 20 is part of a software implementation of an operator specific base station transceiver. The data abstraction, which is carried out for the virtualized entities may enable connecting any virtual base station with any physical radio processing block, independent of the particular radio technology.

The meta-scheduler 100 can be seen as a building block, which may connect to different components, which can be combined flexibly among each other. These components are physical schedulers 30 for different radio technologies (e.g. LTE, WCDMA, Wireless Fidelity (WiFi), Wireless Local Area Network (WLAN), etc.) and abstract schedulers 20. The meta-scheduler 100 in between will be also referred to as cross bar or switch.

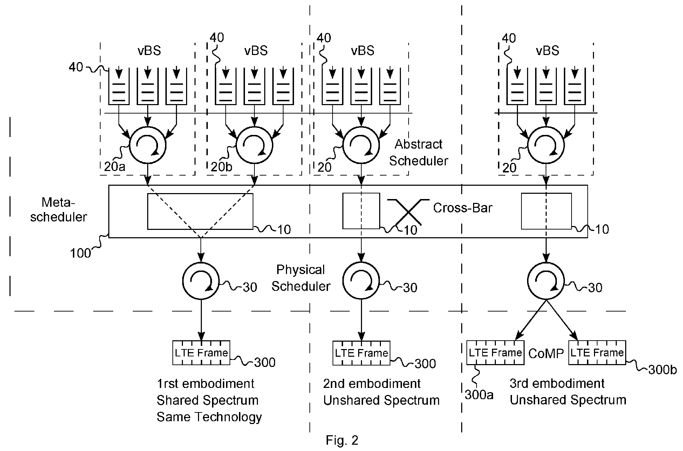

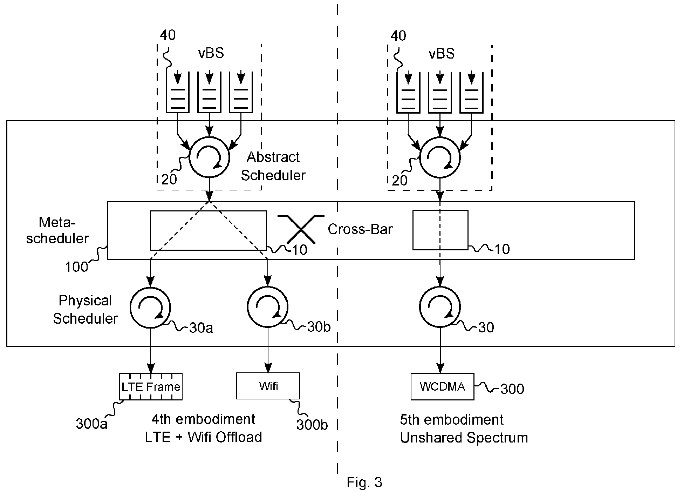

Fig. 2 shows embodiments of meta-schedulers 100 in different scenarios. The different scenarios in the following Figs. 2 and 3 are separated by vertical broken lines. In the following multiple embodiments will be described. In Figs. 2 and 3 embodiments of the meta-scheduler 100 are shown, where the meta-scheduler 100 is connected to one or more virtual schedulers 20, which communicate with a number of queues 40 in a vBS. In the following embodiments the meta-scheduler 100 comprises the above meta-scheduler apparatus 10, of which the details were provided above. The schedulers 30 allocate or assign radio resources of a wireless communication network 300, which is implemented as LTE, WCDMA or as WiFi in the following embodiments. The apparatus 10 in the meta-scheduler 100 is operable to provide a logical connection between the virtualized scheduler 20 and the scheduler 30 of the wireless communication system 300.

In the following embodiments the physical schedulers 30, 30a, 30b are part of the physical radio processing blocks of the particular radio technologies or wireless communication systems 300. The abstract or virtualized schedulers 20, 20a, 20b are part of the virtual base stations and process abstract radio resources. The cross-bar or meta scheduler 100 is a functional entity, which acts like a packet switch and connects logically the virtual schedulers 20, 20a, 20b with the physical schedulers 30, 30a, 30b.

The first embodiment is shown on the left hand side of Fig. 2. Two virtual schedulers 20a and 20b are implemented in two VBS, which are assumed to belong to different operators. In the embodiment of the meta-scheduler apparatus 10 the first interface 12 is operable to communicate with the plurality of virtualized schedulers 20a, 20b. The apparatus 10 is operable to transform between information on abstract resources communicated on the first interface 12 with the plurality of virtualized schedulers 20a, 20b and information on radio resources of the wireless communication system 300 communicated on the second interface 14. The wireless communication system 300 corresponds to an LTE system in the embodiments shown in Fig. 2.

In the first embodiments the plurality of virtualized schedulers 20a, 20b shares the spectrum of the wireless communication system 300. The apparatus 10 is operable to provide logical connections between the plurality of virtualized schedulers 20a, 20b and respective spectrum shares of the radio resources of the wireless communication system 300. It is assumed that the meta-scheduler apparatus tags or marks data packets before transmitting them to the physical scheduler 30, such that the physical scheduler 30 can distinguish the packets of different operator and assigned them to the appropriate spectral share, e.g. a subset of subcarriers assigned to the respective operator.

The second embodiment is shown in the center of Fig. 2 and it comprises similar components as have already been described above. The second embodiment illustrates the scenario, where only one virtualized scheduler 20 is coupled to the meta-scheduler 100 and thus the implementation of one vBS is enabled.

In the third embodiment, which is shown on the right hand side of Fig. 2, the second interface 14 can be operable to communicate with multiple schedulers 30a,b of the same or of different wireless communication systems 300. In this embodiment one physical scheduler 30 serves multiple transmission points 300a and 300b of the LTE system.

In a fourth embodiment, which is illustrated in Fig. 3 on the left hand side, the meta-scheduler 100 serves multiple physical schedulers 30a and 30b, each of which serves one of the transmission points 300a or 300b of the same or different wireless communication systems 300. The fourth embodiment illustrates the case for different wireless communication systems LTE 300a and Wifi 300b, similar considerations apply if both transmission points 300a and 300b are from the same wireless communication system 300 as indicated in the third embodiment.

The fourth embodiment is first considered for the case that the two transmission points 300a and 300b are from the same LTE system 300. The second interface 14 is operable to communicate with multiple schedulers 30a, 30b of the same wireless communication system 300. The meta-scheduler apparatus 10 is operable to communicate a data packet received from the virtualized scheduler 20 to multiple schedulers 30a, 30b at multiple transmission points 300a and 300b of the wireless communication system 300. In the downlink direction, i.e. in the direction from the transmission points 300a, 300b to a mobile transceiver, COMP may be achieved, similar to the third embodiment. In the uplink direction, diversity gains may be achieved as well.

In the uplink, the second interface 14 is operable to communicate with multiple schedulers 30a, 30b of the same wireless communication system 300 and the apparatus 10 is operable to receive a plurality of copies of a data packet from the multiple schedulers 30a, 30b of the same wireless communication system 300. The apparatus 10 is further operable to combine the plurality of copies to a combined copy of the data packet. The apparatus 10 is further operable to forward the combined copy of the data packet to the virtualized scheduler 20.

In the following the fourth embodiment will be considered when the two transmission points 300a, 300b belong to different wireless communication systems LTE 300a and Wifi 300b as shown in Fig. 3. For the downlink direction, the second interface 14 is operable to communicate with multiple schedulers 30a, 30b of the different wireless communication systems 300a, 300b. The meta-scheduler apparatus 10 is operable to communicate a data packet received from the virtualized scheduler 20 to the multiple schedulers 30a, 30b at the multiple transmission points 300a, 300b of the different wireless communication systems 300a, 300b. In the downlink multiple options apply to for the meta-scheduler 100. For example, both systems can be used in parallel to provide a potential mobile transceiver with an increased data rate, i.e. different data is transmitted on different transmission points 300a and 300b. Another option is to transmit the same data on both transmission points 300a and 300b to enable combining at the mobile transceiver. Transmission capacity and/or quality may be increased by enabling a mobile transceiver to achieve diversity gain.

A third option is to use either one of the transmission points 300a and 300b for transmission depending on the load status of the respective system and/or on the QoS requirement of a mobile transceiver, the QoS provision capability of the mobile communication system 300a, 300b, respectively. The second interface 14 is operable to communicate with the multiple schedulers 30a, 30b of the different wireless communication systems 300a, 300b. The apparatus 10 is operable to communicate a data packet received from the virtualized scheduler 20 to one of the different wireless communication systems 300a, 300b based on load information of the different wireless communication systems 300a, 300b. For example, more delay critical services, such as Voice Over Internet Protocol (VOIP), may be provided through the LTE transmission point 300a, more delay tolerant services, such as email, may be provided through the Wifi transmission point 300b.

For the uplink similar considerations as above apply. The second interface 14 is operable to communicate with multiple schedulers 30a, 30b of different wireless communication systems 300. The apparatus 10 is operable to receive a plurality of copies of a data packet from the multiple schedulers 30a, 30b of the different wireless communication systems 300a, 300b. The apparatus 10 is further operable to combine the plurality of copies to a combined copy of the data packet. The apparatus 10 is further operable to forward the combined copy of the data packet to the virtualized scheduler 20. Hence diversity gain may also be achieved in the uplink direction.

The fifth embodiment shown on the right hand side of Fig. 3 illustrates a similar embodiment as the above second embodiment, enabling a vBS for WCDMA system 300 for a single operator.

Generally in all of the above embodiments the apparatus 10 is operable to carry out data packet switching of data packets received on the first interface 12 and transmitted on the second interface 14 and to carry out data packet switching of data packet received on the second interface 14 and transmitted on the first interface 12.

In some embodiments the apparatus 10 is operable to add identification information to a data packet received on the first interface 12 or the second interface 14, the identification information may identify the scheduler 30 of the wireless communication system or the virtualized scheduler 20 as destination of the data packet. According to the configurations of the vBS, which can be dynamically instantiated, the cross-bar 100 can be dynamically configured to forward a data packet between the abstract schedulers 20, 20a, 20b and the physical schedulers 30, 30a, 30b in both directions. Packets, which traverse the cross-bar 100, can be tagged with an identifier called Interface Identification (IId). This IId can unambiguously define the destination of the data packet, which can be either an abstract scheduler 20, 20a, 20b or a physical scheduler 30, 30a, 30b.

Summarizing the embodiments, different types of logical connections are feasible, cf. Fig. 2. A first type of logical connection enables one vBS to exclusively use one radio interface and one radio resource. The radio interface together with the corresponding physical scheduler 30 can be of different types, e.g. LTE, LTE-A, WCDMA, Wifi, etc. as shown in embodiments 2, 3 and 5 or a plurality of different radio interfaces in case of CoMP (Coordinated Multi-Point). In these scenarios one abstract scheduler 20 can be connected with one physical scheduler 30, all data packets are forwarded only between these two entities. A second type of logical connection enables two or more vBS to share one radio interface together, i.e.to share the radio resources, e.g. spectrum, time, code, spatial resources, etc. In this scenario two abstract schedulers 20a, 20b are logically connected with one physical scheduler 30, as shown in the first embodiment. A third type of logical connection enables one vBS to use two radio interfaces of different technologies. In this scenario one abstract scheduler 20 is connected with two physical schedulers 30a, 30b, the data packets are forwarded according to the IId, as shown in the fourth embodiment.

The physical realization of the meta-scheduler 100 building blocks depends on the architecture of the cloud VRAN and be deployed either as software, running on general purpose processors or specialized coprocessors, or on dedicated hardware or a combination of all.

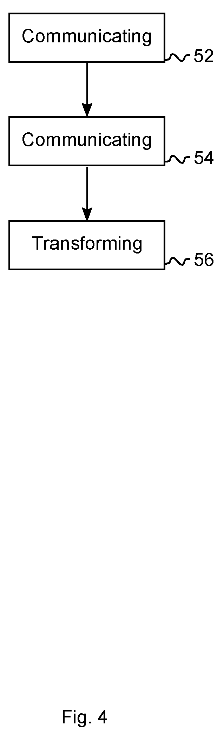

Fig. 4 shows a block diagram of a flowchart of an embodiment of a method for a meta-scheduler 100. The meta-scheduler 100 is operable for interfacing between a virtualized scheduler 20 and a scheduler 30 of a wireless communication system 300. The method comprises a step of communicating 52 on a first interface 12 with the virtualized scheduler 20 and a step of communicating 54 on a second interface 14 with the scheduler 30 of the wireless communication system 300. The method comprises a further step of transforming 56 between information on abstract resources communicated on the first interface 12 and information on radio resources of the wireless communication system 300 communicated on the second interface 14.

Moreover, embodiments may provide a computer program for performing one of the above methods, when the computer program is executed on a computer or processor or a programmable hardware component.

Embodiments may provide the advantage that a sharing and virtualization can be enabled for future mobile networks. Embodiments may provide a concept for a distribution of common resources, as, for example, universal resources for control channels, can be distributed and shared between sharing mobile network operators, for example, between their implementations of virtual base station transceivers. Moreover, embodiments may enable different vendors to provide software for virtualized base stations, as embodiments may provide a universal interface. With the definition of universal interfaces different vendors can provide software for different operators, which may create and allow for new business and network planning strategies. Moreover, embodiments may enable spectrum sharing for a new entrance into the market. Embodiments may make spectrum sharing scenarios more effective, as embodiments may enable a complete virtualized approach also for the control channel. New entrants, such as operators with new services, machine-to-machine services, movie studios, gaming console providers, etc., can therefore use their own implementations on virtual NodeBs to provide mobile services.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing a certain function, respectively. Hence, a "means for s.th." may as well be understood as a "means being adapted or suited for s.th.". A means being adapted for performing a certain function does, hence, not imply that such means necessarily is performing said function (at a given time instant).

Functions of various elements shown in the figures, including any functional blocks may be provided through the use of dedicated hardware, as e.g. a processor, as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and nonvolatile storage. Other hardware, conventional and/or custom, may also be included.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

Further, it is to be understood that the disclosure of multiple steps or functions disclosed in the specification or claims may not be construed as to be within the specific order. Therefore, the disclosure of multiple steps or functions will not limit these to a particular order unless such steps or functions are not interchangeable for technical reasons. Furthermore, in some embodiments a single step may include or may be broken into multiple sub steps. Such sub steps may be included and part of the disclosure of this single step unless explicitly excluded.

## Claims

1. A meta-scheduler apparatus (10) for interfacing between a plurality of virtualized schedulers (20; 20a; 20b) and multiple schedulers (30; 30a; 30b) of different wireless communication systems (300; 300a; 300b), comprising a first interface (12) for communicating with the plurality of virtualized schedulers (20; 20a; 20b) and comprising a second interface (14) for communicating with the multiple schedulers (30; 30a; 30b) of the different wireless communication systems (300; 300a; 300b), wherein the apparatus (10) is operable to transform between information on abstract resources communicated on the first interface (12) with the plurality of virtualized schedulers (20;20a; 20b) and information on radio resources of the wireless communication systems (300; 300a; 300b) communicated on the second interface (14), wherein a virtualized scheduler (20; 20a; 20b) is part of a software implementation of an operator specific base station transceiver, wherein the apparatus (10) is operable to communicate a data packet received from a virtualized scheduler (20; 20a; 20b) to one of the different wireless communication systems (300; 300a; 300b) based on load information or quality of service provision of the different wireless communication systems (300; 300a; 300b).

2. The apparatus (10) of claim 1, wherein the apparatus (10) is operable to provide a logical connection between the virtualized scheduler (20) and the scheduler (30) of the wireless communication system (300).

3. The apparatus (10) of claim 2, wherein the plurality of virtualized schedulers (20a; 20b) shares the spectrum of the wireless communication system (300) and wherein the apparatus (10) is operable to provide logical connections between the plurality of virtualized schedulers (20a; 20b) and respective spectrum shares of the radio resources of the wireless communication system (300).

4. The apparatus (10) of claim 1, wherein the second interface (14) is operable to communicate with multiple schedulers (30a; 30b) of the same or of different wireless communication systems (300).

5. The apparatus (10) of claim 1, wherein the second interface (14) is operable to communicate with multiple schedulers (30a; 30b) of the same wireless communication system (300) and wherein the apparatus (10) is operable to communicate a data packet received from the virtualized scheduler (20) to multiple schedulers (30a; 30b) at multiple transmission points (300a; 300b) of the wireless communication system (300).

6. The apparatus (10) of claim 1, wherein the second interface (14) is operable to communicate with multiple schedulers (30a; 30b) of the same wireless communication system (300) and wherein the apparatus (10) is operable to receive a plurality of copies of a data packet from the multiple schedulers (30a; 30b) of the same wireless communication system (300), wherein the apparatus (10) is further operable to combine the plurality of copies to a combined copy of the data packet, and wherein the apparatus (10) is further operable to forward the combined copy of the data packet to the virtualized scheduler (20).

7. The apparatus (10) of claim 1, wherein the second interface (14) is operable to communicate with multiple schedulers (30a; 30b) of different wireless communication systems (300a; 300b) and wherein the apparatus (10) is operable to communicate a data packet received from the virtualized scheduler (20) to multiple schedulers (30a; 30b) at multiple transmission points (300a; 300b) of the different wireless communication systems (300a; 300b).

8. The apparatus (10) of claim 1, wherein the second interface (14) is operable to communicate with multiple schedulers (30a; 30b) of different wireless communication systems (300a; 300b) and wherein the apparatus (10) is operable to receive a plurality of copies of a data packet from the multiple schedulers (30a; 30b) of the different wireless communication systems (300a; 300b), wherein the apparatus (10) is further operable to combine the plurality of copies to a combined copy of the data packet, and wherein the apparatus (10) is further operable to forward the combined copy of the data packet to the virtualized scheduler (20).

9. The apparatus (10) of claim 1, wherein the apparatus (10) is operable to carry out data packet switching of data packets received on the first interface (12) and transmitted on the second interface (14) and to carry out data packet switching of data packets received on the second interface (14) and transmitted on the first interface (12).

10. The apparatus (10) of claim 1, wherein the apparatus (10) is operable to add identification information to a data packet received on the first interface (12) or the second interface (14), the identification information identifying the scheduler (30) of the wireless communication system or the virtualized scheduler (20) as destination of the data packet.

11. A method for a meta-scheduler (100) for interfacing between a plurality of virtualized schedulers (20; 20a; 20b) and multiple schedulers (30; 30a; 30b) of different wireless communication systems (300; 300a; 300b), comprising communicating (52) on a first interface (12) with the plurality of virtualized schedulers (20; 20a; 20b);
communicating (54) on a second interface (14) with the multiple schedulers (30; 30a; 30b) of the different wireless communication systems (300; 300a; 300b); transforming (56) between information on abstract resources communicated on the first interface (12) with the plurality of virtualized schedulers (20; 20a; 20b) and information on radio resources of the wireless communication systems (300; 300a; 300b) communicated on the second interface (14); and
communicating a data packet received from a virtualized scheduler (20; 20a; 20b) to one of the different wireless communication systems (300; 300a; 300b) based on load information or quality of service provision of the different wireless communication systems (300; 300a; 300b).

12. A computer program having a program code for performing the method of claim 11, when the computer program is executed on a computer or processor.

## Patentansprüche

1. Ein Metazeitplanergerät (10) für das Verbinden einer Vielzahl virtualisierter Zeitplaner (20; 20a; 20b) und multipler Zeitplaner (30; 30a; 30b) verschiedener drahtloser Kommunikationssysteme (300; 300a; 300b), eine erste Schnittstelle (12) für die Kommunikation mit einer Vielzahl virtualisierter Zeitplaner (20; 20a; 20b) und eine zweite Schnittstelle (14) für die Kommunikation mit den multiplen Zeitplanern (30; 30a; 30b) der verschiedenen drahtlosen Kommunikationssysteme (300; 300a; 300b) umfassend, wobei die Vorrichtung (10) ausgelegt ist für das Transformieren zwischen Informationen zu abstrakten Ressourcen, die anhand der Vielzahl virtualisierter Zeitplaner (20; 20a; 20b) über die erste Schnittstelle (12) kommuniziert werden, und Informationen zu Funkressourcen der drahtlosen Kommunikationssysteme (300; 300a; 300b), die über die zweite Schnittstelle (14) kommuniziert werden, wobei ein virtualisierter Zeitplaner (20; 20a; 20b) Teil einer Softwareimplementierung eines betreiberspezifischen Basisstationtransceivers ist, wobei die Vorrichtung (10) dafür ausgelegt ist, um ein Datenpaket, das von einem virtualisierten Zeitplaner (20; 20a; 20b) empfangen wurde, an eines der verschiedenen drahtlosen Kommunikationssysteme (300; 300a; 300b) zu kommunizieren, was auf der Grundlage einer LOAD INFORMATION oder Dienstgütevorgabe der verschiedenen drahtlosen Kommunikationssysteme (300; 300a; 300b) erfolgt.

2. Die Vorrichtung (10) nach Anspruch 1, wobei die Vorrichtung (10) dafür ausgelegt ist, um eine logische Verbindung zwischen dem virtualisierten Zeitplaner (20) und dem Zeitplaner (30) des drahtlosen Kommunikationssystems (300) zur Verfügung zu stellen.

3. Die Vorrichtung (10) nach Anspruch 2, wobei die Vielzahl virtualisierter Zeitplaner (20a; 20b) das Spektrum des drahtlosen Kommunikationssystems (300) teilt und wobei die Vorrichtung (10) dafür ausgelegt ist, um logische Verbindungen zwischen der der Vielzahl virtualisierter Zeitplaner (20a; 20b) und entsprechenden Spektrumsanteilen der Funkressourcen des drahtlosen Kommunikationssystems (300) zur Verfügung zu stellen.

4. Die Vorrichtung (10) nach Anspruch 1, wobei die zweite Schnittstelle (14) dafür ausgelegt ist, um mit multiplen Zeitplanern (30a; 30b) desselben oder anderer drahtloser Kommunikationssysteme (300) zu kommunizieren.

5. Die Vorrichtung (10) nach Anspruch 1, wobei die zweite Schnittstelle (14) dafür ausgelegt ist, um mit multiplen Zeitplanern (30a; 30b) des selben drahtlosen Kommunikationssystems (300) zu kommunizieren und wobei die Vorrichtung (10) dafür ausgelegt ist, um ein von dem virtualisierten Zeitplaner (20) empfangenes Datenpaket an multiple Zeitplaner (30a; 30b) an multiplen Übertragungspunkten (300a; 300b) des drahtlosen Kommunikationssystems (300) zu kommunizieren.

6. Die Vorrichtung (10) nach Anspruch 1, wobei die zweite Schnittstelle (14) dafür ausgelegt ist, um mit multiplen Zeitplanern (30a; 30b) desselben drahtlosen Kommunikationssystems (300) zu kommunizieren, und wobei die Vorrichtung (10) dafür ausgelegt ist, um eine Vielzahl von Kopien eines Datenpakets von multiplen Zeitplanern (30a; 30b) des selben drahtlosen Kommunikationssystems (300) zu empfangen, wobei die Vorrichtung (10) weiterhin dafür ausgelegt ist, um die Vielzahl von Kopien mit einer kombinierten Kopie des Datenpakets zu kombinieren, und wobei die Vorrichtung (10) weiterhin dafür ausgerichtet ist, um die kombinierte Kopie des Datenpakets an den virtualisierten Zeitplaner (20) weiterzuleiten.

7. Die Vorrichtung (10) nach Anspruch 1, wobei die zweite Schnittstelle(14) dafür ausgelegt ist, um mit multiplen Zeitplanern (30a; 30b) verschiedener drahtloser Kommunikationssysteme (300a; 300b) zu kommunizieren und wobei die Vorrichtung (10) dafür ausgelegt ist, um ein von dem virtualisierten Zeitplaner (20) empfangenes Datenpaket an multiple Zeitplaner (30a; 30b) an multiplen Übertragungspunkten (300a; 300b) der anderen drahtlosen Kommunikationssysteme (300a; 300b) zu kommunizieren.

8. Die Vorrichtung (10) nach Anspruch 1, wobei die zweite Schnittstelle (14) dafür ausgelegt ist, um mit multiplen Zeitplanern (30a; 30b) verschiedener drahtloser Kommunikationssysteme (300a; 300b) zu kommunizieren, und wobei die Vorrichtung (10) dafür ausgelegt ist, um eine Vielzahl von Kopien eines Datenpakets von multiplen Zeitplanern (30a; 30b) der verschiedenen drahtlosen Kommunikationssysteme (300a; 300b) zu empfangen, wobei die Vorrichtung (10) weiterhin dafür ausgelegt ist, um die Vielzahl von Kopien mit einer kombinierten Kopie des Datenpakets zu kombinieren, und wobei die Vorrichtung (10) weiterhin dafür ausgerichtet ist, um die kombinierte Kopie des Datenpakets an den virtualisierten Zeitplaner (20) weiterzuleiten.

9. Die Vorrichtung (10) nach Anspruch 1, wobei die Vorrichtung (10) ausgelegt ist für das Vermitteln von Datenpaketen, die über die erste Schnittstelle (12) empfangen und über die zweite Schnittstelle (14) übermittelt wurden, sowie für das Ausführen des Vermittelns von Datenpaketen, die von der zweiten Schnittstelle (14) empfangen und von der ersten Schnittstelle (12) übermittelt wurden.

10. Die Vorrichtung (10) nach Anspruch 1, wobei die Vorrichtung (10) dafür ausgelegt ist, um dem über die erste Schnittstelle (12) oder die zweite Schnittstelle (14) empfangenen Datenpaket Kennungsinformationen hinzuzufügen, wobei die Kennungsinformationen den Zeitplaner (30) des drahtlosen Kommunikationssystems oder des virtualisierten Zeitplaners (20) als Ziel des Datenpakets identifizieren.

11. Verfahren für ein Metazeitplanergerät (100) für das Verknüpfen einer Vielzahl visualisierter Zeitplaner (20; 20a; 20b) und multipler Zeitplaner (30; 30a; 30b) verschiedener drahtloser Kommunikationssysteme (300; 300a; 300b), Folgendes umfassend:
das Kommunizieren (52) einer ersten Schnittstelle (12) mit einer Vielzahl virtualisierter Zeitplaner (20; 20a; 20b);
das Kommunizieren (54) einer zweiten Schnittstelle (14) mit den multiplen Zeitplanern (30; 30a; 30b) des anderen drahtlosen Kommunikationssystems (300; 300a; 300b)
das Umwandeln (56) zwischen Informationen zu abstrakten Ressourcen, die über die erste Schnittstelle (12) mit der Vielzahl virtualisierter Zeitplaner (20; 20a; 20b) kommunizieren, und Informationen zu Funkressourcen des drahtlosen Kommunikationssystems (300; 300a; 300b), die über die zweite Schnittstelle (14) kommuniziert werden; und
das Kommunizieren eines Datenpakets, das von einem virtualisierten Zeitplaner (20; 20a; 20b) empfangen wurde, an eines der verschiedenen drahtlosen Kommunikationssysteme (300; 300a; 300b) auf der Grundlage der Ladeinformation oder der Dienstgütevorgabe der verschiedenen drahtlosen Kommunikationssysteme (300; 300a; 300b).

12. Ein Computerprogramm mit einem Programmcode zur Umsetzung des Verfahrens aus Anspruch 11, wenn das Computerprogramm auf einem Computer oder mit einem Prozessor ausgeführt wird.

## Revendications

1. Appareil de méta-planification (10) pour l'interfaçage entre une pluralité de planificateurs virtuels (20 ; 20a ; 20b) et des planificateurs multiples (30 ; 30a ; 30b) de différents systèmes de communication sans fil (300 ; 300a ; 300b), comprenant une première interface (12) pour communiquer avec la pluralité de planificateurs virtuels (20 ; 20a ; 20b) et comprenant une deuxième interface (14) pour communiquer avec les planificateurs multiples (30 ; 30a ; 30b) des différents systèmes de communication sans fil (300 ; 300a ; 300b), l'appareil (10) permettant d'effectuer une transformation entre des informations sur des ressources abstraites communiquées sur la première interface (12) avec la pluralité de planificateurs virtuels (20 ; 20a ; 20b) et des informations sur des ressources radio des systèmes de communication sans fil (300 ; 300a ; 300b) communiquées sur la deuxième interface (14), dans lequel un planificateur virtuel (20 ; 20a ; 20b) fait partie d'une mise en oeuvre logicielle d'un émetteur-récepteur de station de base propre à un opérateur, l'appareil (10) permettant de communiquer un paquet de données provenant d'un planificateur virtuel (20 ; 20a ; 20b) à un des différents systèmes de communication sans fil (300 ; 300a ; 300b) sur la base d'informations de charge ou de fourniture de qualité de service des différents systèmes de communication sans fil (300 ; 300a ; 300b).

2. Appareil (10) selon la revendication 1, l'appareil (10) permettant de fournir une connexion logique entre le planificateur virtuel (20) et le planificateur (30) du système de communication sans fil (300).

3. Appareil (10) selon la revendication 2, dans lequel la pluralité de planificateurs virtuels (20a ; 20b) partage le spectre du système de communication sans fil (300) et dans lequel l'appareil (10) permet de fournir des connexions logiques entre la pluralité de planificateurs virtuels (20a ; 20b) et des parts de spectre respectives des ressources radio du système de communication sans fil (300).

4. Appareil (10) selon la revendication 1, dans lequel la deuxième interface (14) permet de communiquer avec des planificateurs multiples (30a ; 30b) du même système de communication sans fil ou de différents systèmes de communication sans fil (300).

5. Appareil (10) selon la revendication 1, dans lequel la deuxième interface (14) permet de communiquer avec des planificateurs multiples (30a ; 30b) du même système de communication sans fil (300) et l'appareil (10) permettant de communiquer un paquet de données provenant du planificateur virtuel (20) à des planificateurs multiples (30a ; 30b) au niveau des points de transmission multiples (300a ; 300b) du système de communication sans fil (300).

6. Appareil (10) selon la revendication 1, dans lequel la deuxième interface (14) permet de communiquer avec des planificateurs multiples (30a ; 30b) du même système de communication sans fil (300) et l'appareil (10) permettant de recevoir une pluralité de copies d'un paquet de données provenant des planificateurs multiples (30a ; 30b) du même système de communication sans fil (300), l'appareil (10) permettant en outre de combiner la pluralité de copies avec une copie combinée du paquet de données, et l'appareil (10) permettant en outre de transférer la copie combinée du paquet de données vers le planificateur virtuel (20).

7. Appareil (10) selon la revendication 1, dans lequel la deuxième interface (14) permet de communiquer avec des planificateurs multiples (30a ; 30b) de différents systèmes de communication sans fil (300a ; 300b) et l'appareil (10) permettant de communiquer un paquet de données provenant du planificateur virtuel (20) à des planificateurs multiples (30a ; 30b) au niveau des points de transmission multiples (300a ; 300b) des différents systèmes de communication sans fil (300a ; 300b).

8. Appareil (10) selon la revendication 1, dans lequel la deuxième interface (14) permet de communiquer avec des planificateurs multiples (30a ; 30b) de différents systèmes de communication sans fil (300a ; 300b) et l'appareil (10) permettant de recevoir une pluralité de copies d'un paquet de données provenant des planificateurs multiples (30a ; 30b) des différents systèmes de communication sans fil (300a ; 300b), l'appareil (10) permettant en outre de combiner la pluralité de copies avec une copie combinée du paquet de données, et l'appareil (10) permettant en outre de transférer la copie combinée du paquet de données vers le planificateur virtuel (20).

9. Appareil (10) selon la revendication 1, l'appareil (10) permettant d'exécuter une commutation de paquets de données reçus sur la première interface (12) et transmis sur la deuxième interface (14) et permettant d'exécuter une commutation de paquets de données reçus sur la deuxième interface (14) et transmis sur la première interface (12).

10. Appareil (10) selon la revendication 1, l'appareil (10) permettant d'ajouter des informations d'identification à un paquet de données reçu sur la première interface (12) ou la deuxième interface (14), les informations d'identification identifiant le planificateur (30) du système de communication sans fil ou le planificateur virtuel (20) comme destination du paquet de données.

11. Procédé pour un appareil de méta-planification (100) pour l'interfaçage entre une pluralité de planificateurs virtuels (20 ; 20a ; 20b) et des planificateurs multiples (30 ; 30a ; 30b) de différents systèmes de communication sans fil (300 ; 300a ; 300b), comprenant les étapes suivantes
communiquer (52) sur une première interface (12) avec la pluralité de planificateurs virtuels (20 ; 20a ; 20b) ;
communiquer (54) sur une deuxième interface (14) avec les planificateurs multiples (30 ; 30a ; 30b) des différents systèmes de communication sans fil (300 ; 300a ; 300b) ;
effectuer une transformation (56) entre des informations sur des ressources abstraites communiquées sur la première interface (12) avec la pluralité de planificateurs virtuels (20 ; 20a ; 20b) et des informations sur des ressources radio des systèmes de communication sans fil (300 ; 300a ; 300b) communiquées sur la deuxième interface (14) ; et
communiquer un paquet de données provenant d'un planificateur virtuel (20 ; 20a ; 20b) à un des différents systèmes de communication sans fil (300 ; 300a ; 300b) sur la base d'informations de charge ou de fourniture de qualité de service des différents systèmes de communication sans fil (300 ; 300a ; 300b).

12. Programme informatique possédant un code de programme pour exécuter le procédé selon la revendication 11, lorsque le programme informatique est exécuté sur un ordinateur ou un processeur.
